Europäisches Patentamt

European Patent Office

Office européen des brevets

(11) Veröffentlichungsnummer: **0 216 835**
**B1**

(12) **EUROPÄISCHE PATENTSCHRIFT**

(45) Veröffentlichungstag der Patentschrift: **11.07.90**

(21) Anmeldenummer: **86901841.6**

(22) Anmeldetag: **03.03.86**

(86) Internationale Anmeldenummer:
**PCT/EP86/00107**

(87) Internationale Veröffentlichungsnummer:
**WO 86/05234 12.09.86 Gazette 86/20**

(51) Int. Cl.⁵: **F 01 K 23/02**

(54) **KOMBINIERTE DAMPF-GASTURBINENANLAGE.**

(30) Priorität: **01.03.85 DE 3507170**
**15.03.85 DE 3509357**

(43) Veröffentlichungstag der Anmeldung:
**08.04.87 Patentblatt 87/15**

(45) Bekanntmachung des Hinweises auf die
Patenterteilung:
**11.07.90 Patentblatt 90/28**

(84) Benannte Vertragsstaaten:
**AT BE CH FR GB IT LI NL SE**

(56) Entgegenhaltungen:
**BE-A- 494 708**
**CH-A- 553 917**
**DE-A-1 401 469**
**DE-A-1 906 144**
**US-A-3 069 342**
**US-A-3 466 871**

(73) Patentinhaber: **TCH THERMO-CONSULTING-**
**HEIDELBERG GMBH**
**Im Neuenheimer Feld 517**
**D-6900 Heidelberg 1 (DE)**

(72) Erfinder: **MUCIC, Vinko**
**Finkenweg 1**
**D-6909 Walldorf (DE)**

(74) Vertreter: **Helber, Friedrich G., Dipl.-Ing. et al**
**Patentanwälte Dipl.-Ing. F. G. Helber Dipl.-Ing.**
**J.K. Zenz Giesser Weg 47**
**D-6144 Zwingenberg (DE)**

Courier Press, Leamington Spa, England.

**Beschreibung**

Die Erfindung betrifft eine kombinierte Dampf-Gasturbinenanlage zur Erzeugung elektrischer Energie mit einem Dampferzeuger, dem in einem Kreislauf eine einen elektrischen Generator antreibende Dampfturbine nachgeschaltet ist, aus welcher der Dampf nach Verflüssigung in einem nachgeschalteten Kondensator mittels einer Kondensatpumpe über wenigstens eine Vorwärmstufe als Speisewasser zum Dampferzeuger zurückgeführt wird, und mit einer einen zweiten elektrischen Generator antreibenden Gasturbine mit mehrteiliger Turbine mit mehrfacher Expansion und Zwischenerhitzung der Turbinengase, die mit einem im geschlossenen Kreislauf umgewälzten inerten Turbinengas, wie Stickstoff, Helium o.dgl., betrieben wird, und deren Auslaß für die erhitzten Turbinengase über eine Verbindungsleitung mit Heizflächen im Dampferzeuger und diesen in Reihe nachgeschaltet dem die Vorwärmstufe bildenden Wärmetauscher verbunden ist, der in den Kondensat zum Dampferzeuger zurückführenden Zweig des Kreislaufs eingeschaltet ist, wobei der Dampferzeuger in Kombination mit der Gasturbine so ausgebildet ist, daß die Verdampfung des Speisewassers bei überkritischem Druck stattfindet, und die Dampfturbine in wenigstens zwei Turbinenteile unterteilt und zwischen je zwei aufeinanderfolgende Turbinenteile je eine Zwischenüberhitzungsstufe eingeschaltet ist.

Während in reinen Dampfkraftwerken heute etwa Netto-Wirkungsgrade bis 40% erreicht weden, wird dieser Wirkungsgrad in den bis heute gebauten und geplanten kombinierten Dampf-Gasturbinen-Kraftwerken mit einem einfachen Gasturbinenprozeß und einem nachgeschalteten Dampfprozeß mit einfacher Zwischenüberhitzung des Dampfs auf etwa 45% erhöht.

Bei einer bekannten Anlage der eingangs erwähnten Art (DE-DS 26 56 463), bei welcher die Wärmeenergie aus der bei der Spaltung von Kernbrennstoffen in einem Hochtempeaturreaktor anfallenden Wärme gewonnen wird, wird die Wärmeenergie durch ein im geschlossenen Kreislauf umgewälztes, gasförmiges Kühlmittel, z.B. Helium, abgeführt, wobei dieser Kühlkreislauf gleichzeitig der geschlossene Gasturbinenkreislauf und somit das Reaktor-Kühlmittel gleichzeitig das Turbinengas ist.

Desweiteren ist eine mit zwei Dampfkreisläufen mit unterschiedlichen Mitteltemperaturen arbeitende Turbinenanlage bekannt (DE-A 1 401 469), in denen jeweils eine gesonderte mehrteilige Dampfturbine vorgesehen ist, wobei dem mit niedriger Mitteltemperatur arbeitenden Kreislauf Wärme in mindestens einem von den Verbrennungsgasen beheizten Überhitzer oder Zwischenüberhitzer zugeführt wird. Außerdem soll bei dieser Anlage eine Wärmeübertragung durch Zumischung von Arbeitsmittel aus dem Kreislauf höherer Mitteltemperatur zum Arbeitsmittel des Kreislaufs niedriger Mitteltemperatur möglich sein, was sich bei kombinierten Gas-Dampfturbinenanlagen wegen der unterschiedlichen Arbeitsmittel von vornherein verbietet.

Der Erfindung liegt demgegenüber die Aufgabe zugrunde, eine kombinierte Dampf-Gasturbinenanlage mit Energiezufuhr durch Befeuerung mit konventionellen fossilen Brennstoffen zu schaffen, deren Wirkungsgrad gegenüber den bekannten konventionell befeuerten Anlagen weiter optimiert ist, wobei der Anfall von Verbrennungsabgasen minimiert werden soll.

Ausgehend von einer Anlage der eingangs erwähnten Art wird diese Aufgabe erfindungsgemäß dadurch gelöst, daß die Erhitzer für die Turbinengase ebenso wie die Zwischenüberhitzer im Dampf-Kreislauf von Heizflächen eines kohlebefeuerten Kessels gebildet werden, und daß der kohlebefeuerte Kessel zwei getrennte, hintereinandergeschaltete Feuerungsräume mit jeweils zugeordneten, gesonderten Heizflächen für die Erhitzer bzw. Zwischenerhitzer der Gasturbine aufweist.

Die Heizflächen für die Zwischenüberhitzer der Dampfturbine sind dabei vorzugsweise den den Zwischenerhitzer der Gasturbine bildenden Heizflächen nachgeschaltet, und dem ersten Feuerungsraum des Kessels zugeordnet.

Im Sinne der angestrebten Verringerung des Anfalls von Verbrennungsabgasen und der Verbesserung des Wirkungsgrades empfiehlt es sich außerdem, dem Austritt der Turbinengase aus der Gasturine einen Wärmetauscher nachzuschalten, der andererseits von zumindest einem Teil der dem Kessel als Verbrennungsluft zuzuführenden Luft durchströmt wird und diese vorwärmt.

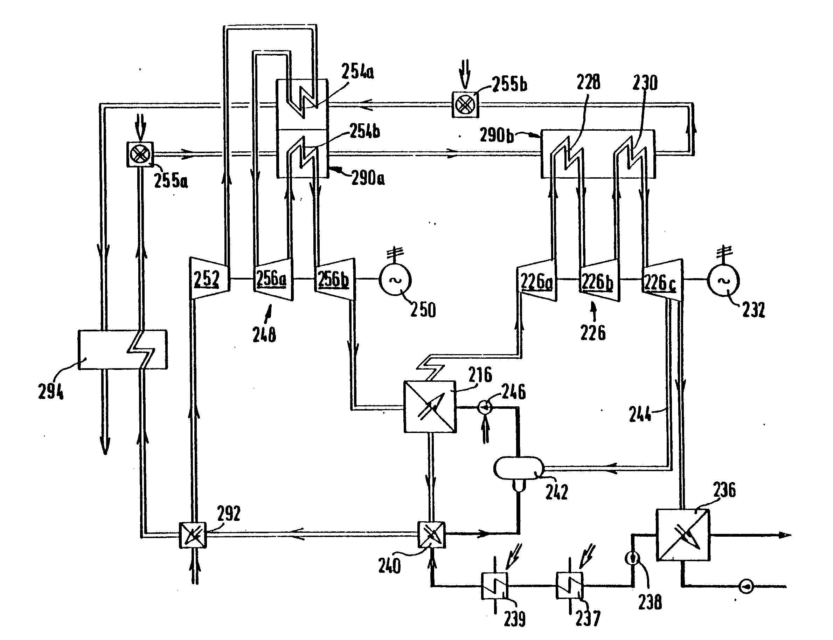

Die Erfindung ist in der folgenden Beschreibung eines Ausführungsbeispiels in Verbindung mit der Zeichnung näher erläutert, die ein Schaltbild einer kombinierten Dampf-Gasturbinenanlage mit Energiezufuhr durch einen kohlebefeuerten Kessel mit zwei hintereinandergeschalteten Feuerungsräumen zeigt.

Die in der Zeichnung gezeigte, kombinierte Dampf-Gasturbinenanlage ist in einen in der Zeichnung rechts dargestellten Dampf-Kraftanlagenteil mit einem von einer Dampfturbine 226 angetriebenen elektrischen Drehstromgenerator 232 und einen in der Zeichnung links dargestellten Gasturbinenanlagenteil mit einem zweiten, von einer Gasturbine 248 angetriebenem elektrischen Drehstromgenerator 250 unterteilt.

Die Wärmeenergie wird in einem kohlebefeuerten Kessel 290a, 29Db erzeugt, der über zwei gesonderte, hintereinandergeschaltete Feuerungsräume 255a, 255b verfügt. Die Verbrennungsluft des Kessels wird in einem regenerativen Wärmetauscher 294 vorgewärmt, in welchem in den aus dem Kessel austretenden Verbrennungsabgasen noch enthaltene Wärmeenergie auf die Verbrennungsluft übertragen wird.

Der Gasturbinenanlagenteil arbeitet mit einem im geschlossenen Kreislauf umgewälzten Turbinengas, z.B. Stickstoff oder Helium, wobei die Gasturbine 248 das mittels ihres Verdichters 252 angesaugte Turbinengas zu einem Erhitzer 254a fördert, der von dem Feuerungsraum 255b zugeordneten Heizflächen des Kessels gebildet wird. Die erhitzten Turbinengase treten dann in den ersten Turbinenteil 256a der Gasturbine ein und leisten dort unter Temperaturabsenkung und Druckerniedrigung Arbeit. Nach dem Austritt aus dem Turbinenteil 256a werden sie in einem dem Feuerungsraum 255a zugeordneten Zwischenerhitzer 254b erneut erhitzt und dem Turbinenteil 256b zugeführt, aus dem sie dann nach Arbeitsleistung zu einem Wärmetauscher 216, nach Austritt aus diesem zu einem Wärmetauscher 240 und schließlich über einen weiteren Wärmetauscher 292 zum Verdichter 252 zurückströmen.

Der Dampfturbinenanlagenteil weist die im dargestellten Fall in drei Turbinenteile 226a, 226b und 226c unterteilte Dampfturbine 226 auf, deren erstem Turbinenteil 226c durch Übertragung von Wärme aus den Turbinengasen im Wärmetauscher 216 erhitzter Dampf zugeführt wird. Nach Austritt aus dem Turbinenteil 226a wird der Dampf in einem Zwischenüberhitzer 228 erhitzt, dem Turbinenteil 226b zugeführt und nach Arbeitsleistung in diesem Turbinenteil erneut in einen Zwischenüberhitzer 230 erhitzt und dann dem letzten Turbinenteil 226c zugeführt. Die Zwischenüberhitzer 228 und 230 werden dabei von dem Feuerungsraum 255a des Kessels zugeordneten Heizflächen gebildet.

Der aus der letzten Turbinenstufe 226c austretende Dampf wird in einen Kondensator 236 geführt, welcher beispielsweise durch Flußwasser gekühlt sein möge und dabei den zugeführten Dampf kondensiert. Das Kondensat wird von einer nachgeschalteten Kondensatpumpe 238 durch einen Wärmetauscher 237 und einen weiteren Wärmetauscher 239 zu einem Wärmetauscher 240 gefördert. Im Wärmetauscher 237 wird bei der Kühlung der Generatoren und im Wärmetauscher 239 bei der Ölkühlung der Sätze gewonnene Abwärme auf das Kondensat übertragen, wodurch dessen Temperatur bereits etwas ansteigen möge. Im Wärmetauscher 240 wird das Kondensat dann durch Übertragung von Wärme aus den Turbinengasen weiter erwärmt und in eine Entgasungseinrichtung 242 weitergefördert, in welcher das Kondensat unter Zufuhr von über eine Leitung 244 vom letzten Turbinenteil 226c zugeführtem Anzapfdampf behandelt und so Gasreste ausgetrieben werden. Das dabei weiter erwärmte Kondensat wird dann durch eine weitere Pumpe 246 in den Wärmetauscher 216 geführt, wo die Dampferzeugung durch Übertragung von Wärme aus den Turbinengasen erfolgt.

Erwähnt sei noch, daß die Kessel-Verbrennungsluft nicht nur durch Übertragung von Wärme aus den Verbrennungsabgasen im Regenerativ-Wärmetauscher 294 vorgewärmt wird, sondern daß zuvor bereits eine Verbrennungsluftvorwärmung in dem oben erwähnten Wärmetauscher 292 erfolgt, in welchem nach Austritt aus dem Wärmetauscher 240 in den Turbinengasen noch enthaltene Wärmeenergie auf die Verbrennungsluft übertragen wird.

**Patentansprüche**

1. Kombinierte Dampf-Gasturbinenanlage zur Erzeugung elektrischer Energie mit einem Dampferzeuger, dem in einem Kreislauf eine einen elektrischen Generator (232) antreibende Dampfturbine (226) nachgeschaltet ist, aus welcher der Dampf nach Verflüssigung in einem nachgeschalteten Kondensator (236) mittels einer Kondensatpumpe (238) über wenigstens eine Vorwärmstufe als Speisewasser zum Dampferzeuger zurückgeführt wird, und mit einer einen zweiten elektrischen Generator (250) antreibenden Gasturbine (248) mit mehrteiliger Turbine mit mehrfacher Expansion und Zwischenerhitzung der Turbinengase, die mit einem im geschlossenen Kreislauf umgewälzten inerten Turbinengas, wie Stickstoff, Helium o.dgl., betrieben wird, und deren Auslaß für die erhitzten Turbinengase über eine Verbindungsleitung mit Heizflächen im Dampferzeuger und diesen in Reihe nachgeschaltet dem die Vorwärmstufe bildenden Wärmetauscher verbunden ist, der in den Kondensat zum Dampferzeuger zurückführenden Zweig des Kreislaufs eingeschaltet ist, wobei der Dampferzeuger in Kombination mit der Gasturbine (248) so ausgebildet ist, daß die Verdampfung des Speisewassers bei überkritischem Druck stattfindet, und die Dampfturbine (226) in wenigstens zwei Turbinenteile (226a, 226b, 226c) unterteilt und zwischen je zwei aufeinanderfolgende Turbinenteile je eine Zwischenüberhitzungsstufe (228; 230) eingeschaltet ist, dadurch gekennzeichnet, daß die Erhitzer (254a; 254b) für die Turbinengase ebenso wie die Zwischenüberhitzer (230; 228) im Dampf-Kreislauf von Heizflächen eines kohlebefeuerten Kessels (290) gebildet werden, und daß der kohlebefeuerte Kessel (290a; 290b) zwei getrennte, hintereinandergeschaltete Feuerungsräume (255a; 255b) mit jeweils zugeordneten, gesonderten Heizflächen für die Erhitzer (254a) bzw. Zwischenerhitzer (254b) der Gasturbine (248) aufweist.

2. Dampf-Gasturbinenanlage nach Anspruch 1, dadurch gekennzeichnet, daß die Heizflächen für die Zwischenüberhitzer (228; 230) der Dampfturbine (226) den den Zwischenerhitzer (254b) der Gasturbine (248) bildenden Heizflächen nachgeschaltet, dem ersten Feuerungsraum (255a) des Kessels (290a; 290b) zugeordnet sind.

3. Dampf-Gasturbinenanlage nach Anspruch 1 oder 2, dadurch gekennzeichnet, daß dem Austritt der Turbinengase aus der Gasturbine (248) ein Wärmetauscher (290) nachgeschaltet ist, der andererseits von zumindest einem Teil der dem Kessel (290a; 290b) als Verbrennungsluft zuzuführenden Luft durchströmt wird und diese vorwärmt.

**Revendications**

1. Installation combinée de turbines à vapeur et à gaz pour la production d'énergie électrique, comportant, d'une part, un générateur de vapeur après lequel est mis en circuit une turbine à vapeur (226), entraînant un générateur électrique (232), dont la vapeur, après liquéfaction dans un condenseur (236) monté à la suite, est ramenée au générateur de vapeur comme eau d'alimentation, au moyen d'une pompe de condensat (238) avec interposition d'au moins un étage de préchauffage et, d'autre part, une turbine à gaz (248), entraînant un second générateur électrique (250), turbine à plusieurs parties, à expansion multiple et réchauffage intermédiaire des gaz de turbine, qui fonctionne avec un gaz de turbine inerte, tel qu'azote, hélium ou analogue, circulant en circuit fermé, et dont l'échappement, pour les gaz de turbines réchauffés, est relié à l'échangeur thermique, formant l'étage de préchauffage, par une conduite de liaison, avec surfaces de chauffe dans le générateur de vapeur et celles-ci montées en série, échangeur thermique qui est inséré dans la branche du circuit ramenant le condensat au générateur de vapeur, le générateur de vapeur, en combinaison avec la turbine à gaz (248), étant agencé de manière que la vaporisation de l'eau d'alimentation s'opère à une pression hypercritique et la turbine à vapeur (226) étant subdivisée en au moins deux parties de turbine (226a, 226b, 226c) et un étage de préchauffage intermédiaire (228; 230) étant mis en circuit respectivement entre deux parties de turbine qui se suivent, caractérisée par le fait que les réchauffeurs (254a; 254b) pour les gaz de turbine ainsi que les réchauffeurs intermédiaires (230; 228) dans le circuit de vapeur sont formés de surfaces de chauffe d'une chaudière chauffée au charbon et que la chaudière chauffée au charbon (290a; 290b) présente deux chambres de chauffe (255a; 255b) séparées, mises en circuit l'une derière l'autre, munies de surfaces de chauffe spéciales, respectivement associées, pour le réchauffeur (254a) et le réchauffeur intermédiaire (254b) de la turbine à gaz (248).

2. Installation de turbines à gaz et à vapeur selon la revendication 1, caractérisée par le fait que les surfaces de chauffe pour les réchauffeurs intermédiaires (228; 230) de la turbine à vapeur (226), mises en circuit après les surfaces de chauffe formant le réchauffeur intermédiaire (254b) de la turbine à gaz, sont associées à la première chambre de chauffe (255a) de la chaudière (290a; 290b).

3. Installation de turbines à gaz et à vapeur selon la revendication 1 ou 2, caractérisée par le fait qu'après la sortie des gaz de la turbine à gaz (248) est mis en circuit un échangeur thermique (290) qui est, par ailleurs, parcouru par au moins une partie de l'air amené à la chaudière (290a; 290b) comme air de combustion et qui préchauffe celui-ci.

## Claims

1. Combined steam and gas turbine plant for the production of electrical energy, having a steam generator which is followed in a circuit by a steam turbine (226) driving an electrical generator (232), from which the steam, after liquefaction in a condenser (236) is returned to the steam generator as feed water by means of a condensate pump (238) through at least one preheating stage and having a gas turbine (248) with multipartite turbine with multiple expansion and intermediate heating of the turbine gases, which is driven with an inert turbine gas circulated in a closed circuit, such as nitrogen, helium or the like, and whose outlet for the heated turbine gases is connected by a connecting conduit to heating surfaces in the steam generator and to the heat exchanger forming the preheating circuit and following the steam generator in tandem, and is inserted into the branch of the circuit returning the condensate to the steam generator, while the steam generator in combination with the gas turbine (248) is so configured that the evaporation of the feed water takes place at supercritical pressure, and the steam turbine (226) is divided into at least two turbine parts (226a, 226b, 226c) and an intermediate superheating stage (228; 230) is inserted between each pair of successive turbine parts, characterized in that the heaters (254a; 254b) for the turbine gases, as well as the intermediate superheaters (230; 228) are formed in the steam circuit of heating surfaces of a coal-fired boiler (290), and that the coal-fired boiler (290a; 29Db) has two separate fire chambers (255a; 255b) in tandem, with separate heating surfaces associated one with the heaters (254a) and one with the intermediate heaters (254b), respectively, of the gas turbine (248).

2. Steam and gas turbine plant according to claim 1, characterized in that the heating surfaces for the intermediate superheaters (228; 230) of the steam turbine (226) are connected to the heating surfaces forming the intermediate heater (254b) of the gas turbine (248), [and] are associated with the first fire chamber (255a) of the boiler (290a; 290b).

3. Steam and gas turbine plant according to claim 1 or 2, characterized in that a heat exchanger (290) is connected to the output of the turbine gases from the gas turbine (248), through which at least a part of the air to be fed to the boiler (290a; 290b) as combustion air flows and is heated.